# EUROPEAN PATENT APPLICATION

(11) **EP 3 211 216 A1**
(43) Date of publication of application: **30.08.2017**
(21) Application number: 16382076.4
(22) Date of filing: 24.02.2016
(51) Int. Cl.: F03D 1/00, F03D 80/50, B05C 17/005, B05C 5/02, B29C 73/02, B29C 73/24, F03D 1/06

(54) **NOZZLE ASSEMBLY FOR REPAIRING OR UPGRADING WIND TURBINE BLADES, METHOD THEREOF AND KIT FOR THE SAME**

(71) Applicant: Wind Composite Services Group, LLC, Houston, TX 77032 (US)
(72) Inventor: MÜLLER, Benjamin, 28703 Madrid (ES)
(74) Representative: Lang, Johannes

(57) **Abstract**

This invention relates generally to a nozzle, method thereof and a kit set for the same for spreading material on curved surface, in the field of repairing services for wind turbine blades and other similar composite components. More particularly, the present invention relates to a nozzle for spreading material on a leading edge of a wind turbine blade for guiding the material along the surface, generally, for repairing or upgrading. In addition it relates to a method and a kit for performing the application.

## Description

### BACKGROUND OF THE INVENTION (US)

### TECHNICAL FIELD

This invention relates generally to a nozzle assembly for spreading material on curved surface, in the field of repairing services for wind turbine blades and other similar composite components, the method thereof and kit set for the same. More particularly, the present invention relates to a nozzle for spreading material on a leading edge of a wind turbine blade for guiding the material along the surface, generally, for repairing or upgrading.

### BACKGROUND ART

Composites are structures highly engineered for maximum performance with minimal weight. The wind energy sector makes heavy use of composites in components like blades, nacelles, cones and spinners. With up to 85m in length and 100 or plus, different specialty materials in a blade, wind turbine blades are large and highly complex aerodynamic structures.

Unlike most other wind turbine components, blades are exposed to the environment whilst rotating at high speeds. With wind turbines designed to last for 20 years, it is critical to adequately monitor the condition of blades and rapidly correct any issues in order to ensure a reliable and steady supply of electricity. In general, the tips and the Leading Edges (LE) of the blades are most affected by erosion.

This may include solutions for preventive and reactive maintenance. With multiple possible modes of failure and many blade models installed in the field, each repair is generally unique and thus a repair procedure will be proposed specific to the damage prior to execution. For this reason, a full range of repair methods, from cosmetic to deep structural repairs, is needed.

Repair methods of this purpose are known in the prior art, for example from US20070231156 which refers to a method and coating for protecting and repairing an airfoil surface. Although it is not specifically a nozzle, it states that the repair material may be applied directly onto the blade or the bottom of the flexible applicator and then pulled over the damage area. In this sense the flexible applicator resembles a spatula as per its definition of a small implement with a broad, flat, flexible blade used to mix, spread and lift material.

In terms of measurements, the US20070231156 states that the applicator must be wider than the repair area. This is due to it being designed to profile according to the contour of the blade. Concerning the direction and start point of application, the direction of application is the same as per the standard concept of applying and moving away from the uncured applied product, however the method does not avoid the touch on the material to be applied.

However, the method described in US20070231156 does not clarify if it could be used with a material with high adhesion when uncured, or mention the fact it must self-level in less than 2 min at 20 ºC for the ETU and 6 min for the 4601 at 20 ºC. For this reason, such kind of method is incompatible with such Leading Edge Protection (LEP) encountered in the market like, for example, products named 3M 4601 or BASF ETU.

Other solutions are known, like spatula applicators. In this area, an apparatus is disclosed from US2804767 which refers to a gun type trowel comprising a resilient trowel blade having an edge, a resilient wall symmetrically secured to and spaced from the trowel blade having an edge spaced a short distance below the trowel edge and adapted to form a receiving chamber and a duct with the blade, said wall having the area thereof adjacent to said edge corrugated to define with the blade a plurality of laterally spaced discharge nozzles of substantially uniform size, said duct being adapted to distribute heavy consistency fluid material there through uniformly before such flow arrives in the area of the corrugations adjacent the trowel edge, and means to feed such material through the duct and out of said nozzles.

The applicator US2804767 is generic and it has a corrugated edge, however, this corrugation is not intended to evenly distribute the material out of the nozzle once said edge corrugated to define with the blade a plurality of laterally spaced discharge nozzles of substantially uniform size, said duct being adapted to distribute heavy consistency fluid material there through uniformly before such flow arrives in the area of the corrugations adjacent the trowel edge.

The document GB2375709 refers to a depilatory wax applicator with a flared spreader and integrated funnel mouth, wherein the wax applicator has an elongate handle with an inlet for a wax supply, an outlet with an integrated funnel mouth and flared spreader plate. The depilatory might be disposable with a cartridge for the wax with the handle and spreader being on opposite sides of the inlet for the cartridge. The spreader might be flared or sectored with an elongate circumferential discharge outlet nozzle at an outboard end.

Further in GB2375709, the handle could be profiled to fit between the fore finger and thumb. This invention relates to depilatory (i.e. cutaneous surface hair removal) wax application, to the (human) skin surface, and is particularly, but not exclusively concerned with an applicator, dispenser or discharge nozzle configuration. Installation is effected upon removal of a similarly screw-threaded closure cap (not shown) - and rupturing of any tube nozzle outlet seal.

The difference between these concepts is the direction of the flow of the application. In the flared outlet nozzle, described in GB2375709, the material flowing through the nozzle will suffer a 90º direction change before coming in contact with the surface to be applied.

Moreover, the applicator disclosed in GB2375709 has an internal flow passage communicating between the inlet in the mounting head and the discharge nozzle in the spreader plate. It means, the material (wax) will be discharged in the spreader plate being exposed in contact to it.

This implies the nozzle of GB2375709 also shapes the application and that some of the material to be applied will remain as residue on the upper edge of the nozzle. This makes the application of a fast curing product impossible, such as mentioned before - by using products like 3M 4601 and the BASF ETU, because the residue will accumulate and disrupt the application.

### DISCLOSURE

### TECHNICAL PROBLEM

The main problems to be solved by the technical solution here disclosed are the waste, messy manual application, resistance to flow during the application and high application times due to hand mixing or application, especially when using very stick materials, such material which are used for coating and efficiently protecting wind turbine rotor blades onshore and offshore against rain, hail and sand erosion, for example.

Solutions known in prior art are not suitable in providing a solution which does not compromise the quality and at the same time fulfilling very specific requirements in terms of measurements parameter like thickness and uniformity.

The attempt to protect and/or to return the damaged blade to its originally engineered specifications, among other specifications, is a challenging task during operation and maintenance repairs either on the ground or at height.

Some of the difficulties of safely repairing a damaged wind blade in situ are wind, dust and weather conditions. These circumstances do not allow technicians to adequately handle such materials, generally sticky, to be applied over the needed area and to cure properly. Under such conditions, repair may require rework and consequently, the maintenance does not operate efficiently.

Furthermore, depending on the size of the repairs or upgrades, it is also recommended to be done on the ground. However, most of the repairs are smaller, yet urgent, especially when it comes on leading edges protections once, such part of the blade impacts on the performance in capturing the energy of the wind.

### TECHNICAL SOLUTION

The present invention relates to a nozzle, comprising a specific open cross section designed to shape the flow of the material being expelled. The nozzle concept is designed to overcoat the blade to specific width parameters. Since the nozzle has a fixed width, the area to be repaired may be achieved with an accuracy of ± 2mm.

Depending on the wind blade specification the nozzle may be designed to apply the Leading Edge Protection (LEP) in one or two coats. However, the nozzle does not touch the applied LEP allowing it to settle and cure. The applicator can be used with either the 3M 4601 or the BASF ETU, as example only, due to the high adhesion the products have when uncured and the fact that they must self-level in less than 2 min at 20 ºC for the ETU and 6 min for the 4601 at 20 ºC. Therefore, the applicator concept is compatible with these LEP.

As the channels in the nozzle distribute the material to a top reservoir, with the present concept, the material will be displaced only after the nozzle, never coming in between the surface of the target application and the nozzle itself, on the rear concave surface.

### ADVANTAGEOUS EFFECTS

The use of the nozzle assembly here disclosed has a number of benefits, namely the amount of the material as well as its thickness disposed over the blade can be precisely controlled also allowing the use of very stick materials which would not be acceptable in a manual situation, or by using current nozzles, due to resistance of flow, shape and direction of application.

The speed of application can also be better controlled providing a method which eliminates deformities or waste after the application is finished.

The use of the nozzle assembly here disclosed also avoids the need of using tools to remove air entrapped, like hot air blowers, to eliminate the air bubbles that may appear in the coating as small defects or honey comb clusters. In nearly all cases, they are caused by air entrapment in the coating or applied film like problems of using roller covers too short or too long of a nap roller can cause air to be generated into the coating causing air bubbles.

### DESCRIPTION OF DRAWINGS

The above and other exemplary aspects and/or advantages will become more apparent by describing in detail exemplary embodiments with reference to the accompanying drawings, which are not necessarily drawn on scale. In the drawings, some identical or nearly identical components that are illustrated in various figures can be represented by a corresponding numeral. For purposes of clarity, not every component can be labeled in every drawing.
Fig. 1 is an isometric view of the nozzle.
Fig. 2 is a top view of the nozzle showing the opening as well as the distribution of the channels along the nozzle.
Fig. 3 is a detailed view of the nozzle zooming the opening along the nozzle profile.
Fig. 4 is a cross section view taken along the lines A-A and C-C in Fig. 5. Section C-C shows the entry reservoir and the section A-A shows the discharge reservoir.
Fig. 5 is rear view of the nozzle, which refers to the concave surface.
Fig. 6 is a lateral view of the nozzle, which refers to the convex surface.
Fig. 7 is a cross section view taken along the line F-F in Fig. 6 showing the top reservoir.
Fig. 8 and Fig. 9 are an isometric view of the nozzle indicating a coordinate system XYZ and the intake adapter (12) variations of positioning along the nozzle body.
Fig. 10 is an embodiment showing, schematically, the method of using the nozzle manually to apply material over a leading edge surface.
Fig. 11 is an embodiment showing, schematically, the method of using the nozzle by using a robot arm, or similar robotic equipment, to apply material over a leading edge surface.

### DETAILED DESCRIPTION OF THE INVENTION

This invention is not limited in its application to the details of construction and the arrangement of components set forth in the following description or illustrated in the drawings. The invention is capable of other embodiments and of being practiced or of being carried out in various ways. Also, the phraseology and terminology used herein is for the purpose of description and should not be regarded as limiting. The use of "including", "comprising", "having", "containing" or "involving", and variations thereof herein, is meant to encompass the items listed thereafter and equivalents thereof as well as additional items.

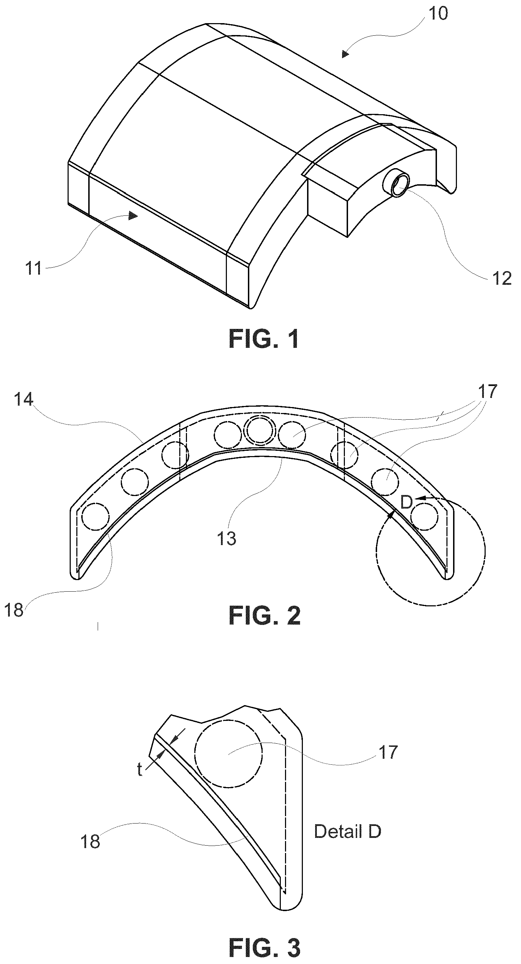

Fig. 1 shows an isometric view of the nozzle 10 having an intake adapter 12 to be attached to any suitable cartridges and applicators commercially available in the market, like a caulking gun, but not limited to it. The nozzle assembly 10 comprises a main rigid body 11, which is configured by at least a rear concave surface and a frontal convex surface shape curving inwards in relation to a position in front and along a wind blade 22 leading edge surface. The rigid body 11 of the nozzle assembly 10 can be manufactured of plastic, metal or any other suitable material, like a flexible material. The entry reservoir 15 and discharge reservoir 16 are also shown.

The intake adapter 12 is configured to receive the sticky repair or upgrade material 24 into the nozzle assembly 10 injecting such material inside the nozzle assembly 10 by in the bottom portion of the main rigid body and reaching the entry reservoir 15, wherein the sticky repair or upgrade material 24 is fed by such intake adapter 12, by using a pistol-like caulking gun, in the entry reservoir 15 where the sticky repair or upgrade material 24 is accumulated before being spread through the specific channels 17 and then, accumulated on the discharge reservoir 16 before being spread to the entire discharge opening 18 reaching the wind blade 22 leading edge area to be repaired.

Fig. 2 shows the top view of the nozzle showing the discharge opening 18 as well as the distribution of the specific channels 17 along and inside the nozzle assembly 10. The discharge opening 18 is placed after at least one discharge reservoir 16 and it may have up to 650µ thick "t" opening all along the top of the main rigid body 11. At least one discharge reservoir 16 is placed inside the main rigid body and positioned in the top portion of the main rigid body 11.

As depicted in Fig. 2, there is a plurality of specific channels 17 passing through the main rigid body 11 and connecting the entry reservoir 15 to the discharge reservoir 16. Fig. 3 shows a detailed view of the nozzle zooming the discharge opening 18 along the nozzle profile of up to 650µ thick along the top of the main rigid body 11 substantially near the concave surface 13 and afterwards the discharge reservoir 16 for spreading sticky repair or upgrade material 24 uniformly and directly on wind blade 22 leading edge to be repaired.

The discharge opening 18 up to 650 microns thick is to allow for thickness control of the material, which ultimately also depends on the flow of the material.

It must be noted that different size nozzles are covered by the present invention as long as the shape and functionality are the same as long as the discharge opening is the same since it is specified.

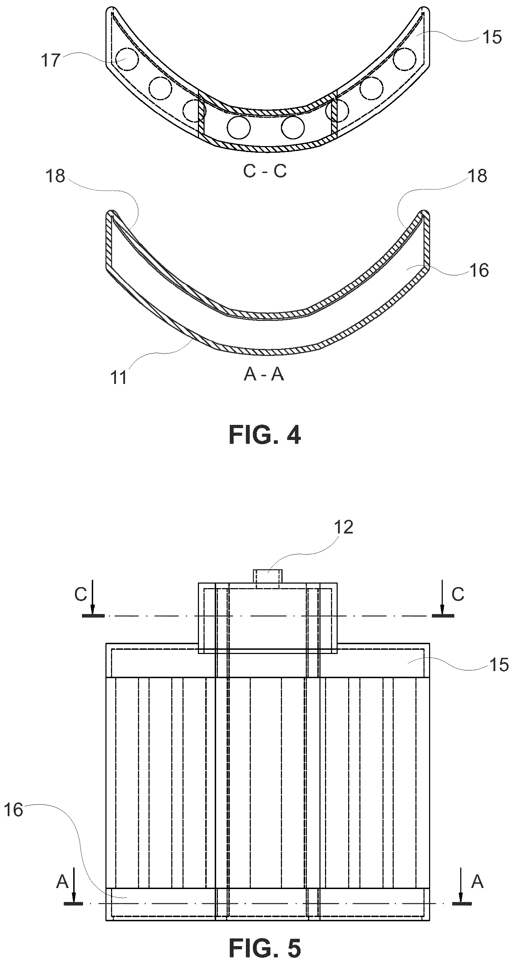

Fig. 4 shows a cross section view taken along the lines A-A and C-C in Fig. 5. Section C-C shows the entry reservoir 15 and the section A-A shows the discharge reservoir 16. In Fig. 5 is rear view of the nozzle, which refers to the concave surface showing at least eight specific channels 17 substantially spaced inside the main body 11. It is noted that the reservoirs 15 and 16 follow the shape of the main body 11 and are closed by a wall from the outside whereas, by the inside wall, they are interconnect to each other by the specific channels 17.

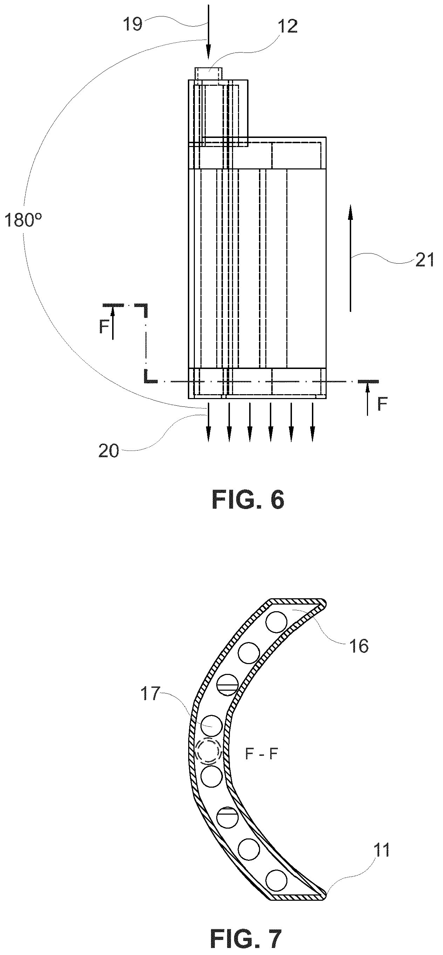

Illustrated in Fig. 6 is a lateral view of the nozzle wherein the direction arrow representing the material inflow direction 19 as well as the material outflow direction 20, after the material passes through the main rigid body 11 to reach the discharge reservoir 16 after the material being accumulated in the entry reservoir 15, whereas the Fig. 7 is a cross section view taken along the line F-F in Fig. 6 showing the discharger reservoir 16. In other words, the interior of the nozzle assembly 10 has specific channels 17 where the leading edge protection (LEP) is spread to reach the entire discharge opening 18 by passing at least two intermediary reservoirs, spaced and interconnected to each other by specific channels 17 which are placed inside the main body 11, because of this, the material is previously accumulated before being spread to the area to be repaired.

The prior accumulation on such reservoirs (15, 16) allows a smooth flow of material inside the nozzle assembly 10 providing a constant flow.

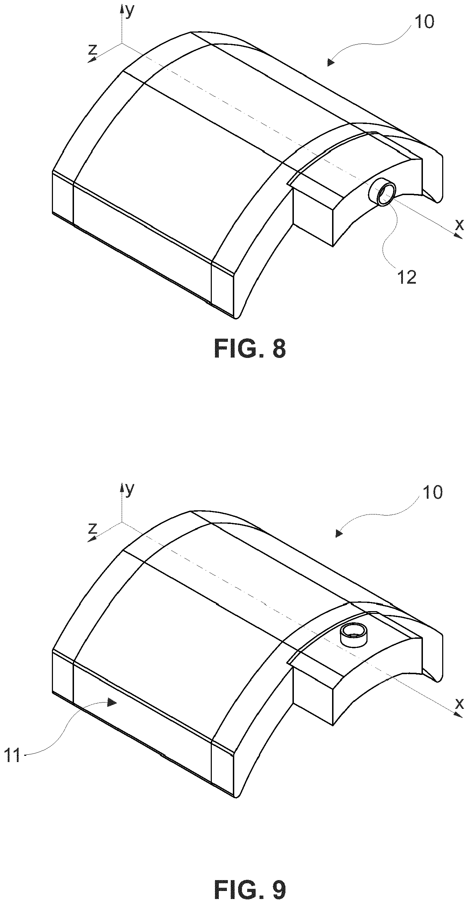

Fig. 8 depicted an isometric view of the nozzle wherein the coordinate X, of a coordinate system XYZ, pass along the longitudinal axis of the nozzle and centered to the intake adapter (12).

Fig. 9 shows the same isometric view and coordinate system XYZ depicted in the Fig. 8 wherein the intake adapter (12) is placed perpendicular over the Frontal convex surface (14) in a 90º in relation the longitudinal axis-X, alternatively.

Further, it is an object of this invention to provide a method to efficiently repair the area damaged over a wind blade surface, especially in the leading edge.

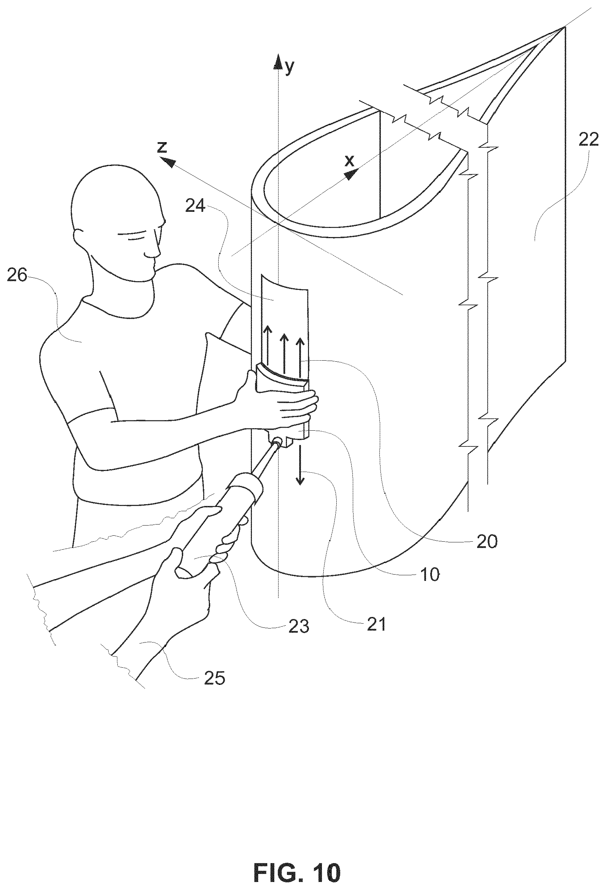

Thus, as depicted in Fig. 10, schematically, one embodiment of the invention relates to a method of repairing wind blades 22 by using the nozzle assembly 10 comprising the steps of positioning the nozzle assembly 10 by the rear concave surface shape 13 above and in contact to the surface to be repaired, feeding sticky repair or upgrade material 24 by the intake adapter 12 to the entry reservoir 15 in the bottom portion of the main rigid body 11 up to the sticky repair or upgrade material 24 reaches the discharge opening 18, moving the nozzle assembly 10 by hand or by a robot lengthwise along the leading edge of the wind blade while pumping stick repair material with a pistol-like caulking gun.

In one embodiment, the direction of the material during inflow 19 and outflow 20 is at the same plane, more precisely, in-between 90º to 180º, as depicted in Fig. 9 and 6, respectively, in a way that deviation of the material flow may occurs or not, helping to control the resistance of flow during the application. On the other hand, the direction of nozzle moving direction 21 is in the contrary of material inflow 19 and outflow 20, as depicted in Fig. 7. Such method of repairing allows achieving an accuracy of ± 2mm of the deviations of the position where the LEP is to be applied 24 consistent of the lateral movement of the entire piece and consequently the application that may occur while using the nozzle.

In general, the method of repairing wind blades comprising the steps of surface preparation by cleaning the area where the repair or upgrade material 24 will be applied with a solvent covering at least twice the distance of the work area surface, in this case the leading edge bonding line, on each side using a tac rag to avoid any contamination, rinsing with distilled water to check if surface is fully cleaned, checking if the water does not stay evenly on the cleaned surface and/or if breaks/beads appear, if so, the cleaning process needs to be repeated as necessary until area is fully cleaned, sanding down the surface carefully removing all damaged material in case of a repair or roughen top coat in case of an upgrade, removing dust carefully with clean rag then do a second pass with a tack rag.

Cleaning the area comprises removing chlorides or salts, dust, grease or any other contaminates from the area where the repair or upgrade material 24 will be applied, with plenty of distilled water or appropriate substitute. New rags may be use constantly to avoid any contamination.

The area to be clean must be at least twice the distance of the work are from the leading edge bonding line on each side.

Rinsing may also involves removing particles and residual contamination eventually introduced during cleaning. It is understood that rising is not always required to check if the surface is fully cleaned once the cleaning process may be optimized.

In general rinse steps may involve water or solvent-based, force, temperature and time, being understood that the rinsing with distilled water is to avoid product damage or undesirable surface modification in order to not itself interfere with subsequent steps like sanding, product application and coating. For this reason, the rising step it is not limited to distilled water, but can be also a solvent base that match with process and windblade requirements.

Solvent cleaner may be an acetone or similar. Salt test equipment may also be used and are those commercially available and suitable for the specific surface.

Checking if the water does not stay evenly on the cleaned surface may be performed by visual inspection.

The sanding step may require marking the area, e.g. with a tape, to be sanded before sanding, to prevent over spread to areas other than the leading edge. Sanding step is performed by suing an orbital sander with a 120-grit sanding disc, carefully removing all damaged material.

The exact rugosity of the surface on to which the repair or upgrade material 24 will be applied is specified by the material manufacturer.

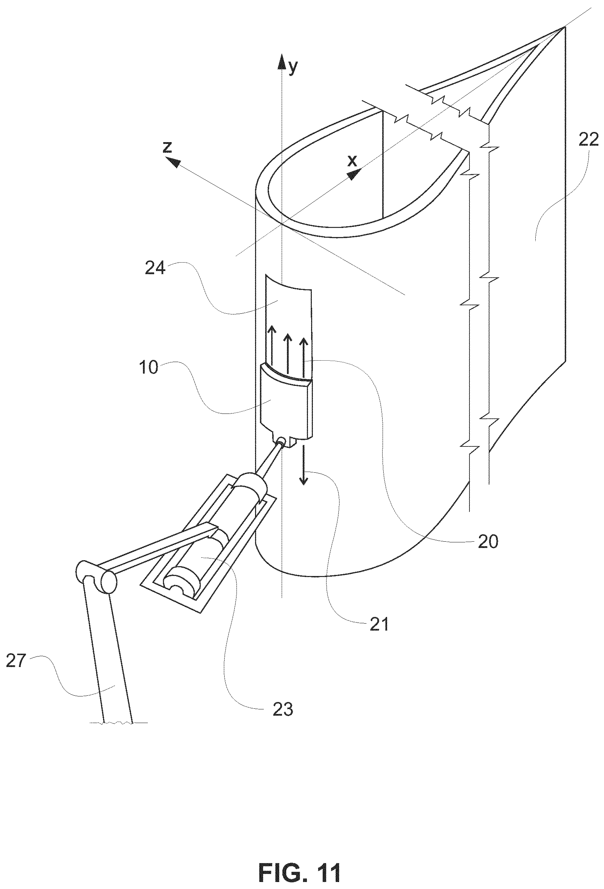

The method of repairing wind blades comprises further the steps of product application by locating the nozzle centered over the Leading Edge of the blade wherein the center of the intake hole should be aligned, by, with the bonding line of the blade or exact midpoint between the suction side shell and the pressure side shell (Y-axis lengthways, shown in Fig. 10 and 11).

The locating the nozzle centered over the Leading Edge of the blade wherein the center of the intake hole should be aligned can be also performed by a robot arm, alternatively, as depicted in Fig. 11, schematically.

Yet, the method includes the steps of commencing the pumping of the material, by at least one operator (25, 26) or a robot arm (27) to be applied into the intake hole and continue until both reservoirs and channels have been filled, at which point the material will begin to be displaced from the discharge opening wherein the pumping of the material may be done either with a manual, electrical or pneumatic system, with, as example, a pistol-like caulking gun (23), the latter being preferable to ensure a constant material flow. Once the material is showing from the discharge opening, beginning to displace the nozzle away from the first material applied wherein the nozzle should at no point in time come in contact with the discharged material.

Further, the steps include ensuring the correct constant speed of displacement and material flow requirements are met so the displaced material has the thickness as specified by the supplier of the repair or upgrade material, sliding the nozzle and pumping equipment over the entire application area effectively coating the LE with the upgrade or repair material.

When finished, creating a negative pressure on the pumping equipment, or alternative action having the same result, to reverse the flow of material and effectively stop the application ensuring that no residue material contaminates the adjacent areas.

Yet, checking the material thickness by using a wet thickness gauge in an area where this verification will not compromise the application. The wet thickness gauge must be placed at 90º to the coated substance and ensured the gauge is firmly in contact with the substrate. After the gauge is removed from the substrate, it must be observed the MIL value of the largest tooth or notch that is wet and the smallest tooth that is not wet. The wet film thickness lies between these two values.

The wet thickness gauge may be any commercial one which are designed to quickly and easily measure the thickness of coatings immediately after they have been applied to a substrate. These gauges are also commonly known as: Combs, MIL Gauges, Step Gauges and Notched Gauges.

The clean rags may be made of textile, such as microfiber ragas. Drying rags can be any cheap rag.

Another embodiment of the invention relates to a kit directed to other articles not essentially and physically connected to the nozzle, but in a way grouped together for performing the method.

The kit comprising an elastomeric sticky repair or upgrade material 24 and a nozzle assembly (10) as described in claim 01 and including at least an application nozzle, an orbital sander, a 120 grit sanding paper, a solvent cleaner, a clean rags, a distilled water, an alcohol based cleaner, a manual, pneumatic or electric cartridge gun, an adhesion promoter, if specified, a drying rags, a wet film thickness gauge, an air compressor with hoses, a LEP or repair material and a manual or robotic displacement system.

The relation between the method and kit set may be specified as the use of at least an orbital sander with a 120 grit sanding paper, a solvent cleaner, clean rags, and distilled water, alcohol based cleaner for the step of surface preparation, and, at least a manual, pneumatic or electric cartridge gun, adhesion promoter (if specified), a wet film thickness gauge, air compressor with hoses, LEP or repair material, and a manual or robotic displacement system for the step to product application.

As needed, the kit set may further include alternatives of elements that are part of it that provide the same result e.g., commercial alternatives for orbital sander with a 120 grit sanding paper, a solvent cleaner, clean rags, and distilled water, alcohol based cleaner for the step of surface preparation, and, at least a manual, pneumatic or electric cartridge gun, adhesion promoter (if specified), a wet film thickness gauge, air compressor with hoses, LEP or repair material, and a manual or robotic displacement system for the step to product application, as well as instruction manual of the kit set.

Orbital sanders is preferred because it uses a round disc to sand in both an orbital as well as rotary motion. By combining these two sanding motions at the same time, it reduces swirl marks that can ruin a fine finish in the area to be repaired or updated. Palm sander or details sander may also be used alternatively or in a complementary way, if necessary to get the result.

It is to be noted that the instruction manual of the kit for applying the method by using the nozzle assembly here disclosed includes the description about the method according to the present invention explained in above. Further, includes dust mask, hearing protection, protective eyewear, gloves and other safety equipment that are required by health and safety legislation and hazards, and consequently does not need to be claimed by not involving invention matter.

It is understood that adhesion promoter is not always required otherwise specified.

### Numerals Explanation of numerals

- 10: Nozzle assembly
- 11: Rigid body
- 12: Intake adapter
- 13: Rear concave surface
- 14: Frontal convex surface
- 15: Entry reservoir
- 16: Discharge reservoir
- 17: Specific channels
- 18: Discharge opening
- 19: Material inflow direction
- 20: Material outflow direction
- 21: Nozzle moving direction
- 22: Windblade concept
- 23: Cartridge, pistol-like caulking gun
- 24: Repair or upgrade material applied
- 25: Operator A
- 26: Operator B
- 27: Robot arm

### Terminology Definitions

The term "robot" as used herein generally is understood to have a broader meaning than an automatically controlled, reprogrammable, multipurpose, manipulator programmable in three or more axes, which may be either fixed in place or mobile for use in industrial automation applications. It is may be a simple mechanical agent that is guided by a person, a computer program or electronic circuit.

The term "Leading Edge" is understood as a surface of the wind blade that first contacts the air, or fluid in general, but also as the foremost edge of generally an airfoil section, encompassing aerodynamic definition as well as structural point of view, covering a narrow and a broader leading edge, from the tip-end to the root-end of a general conceptual blade. "Leading Edge Protection" stands for any suitable material for protecting the leading edge.

The term "contamination" and "contaminates" means anything that will interfere with performance, long-term reliability, final finishing, or surface appearance if it remains on the wind blade.

The term "visual inspection" it to be understood in a broader sense as is a common method of quality control used in maintenance of a product, meaning inspection of equipment and structures using either or all of raw human senses such as vision, hearing, touch and smell and/or any non-specialized inspection equipment, but herein comprise inspections requiring Ultrasonic, X-Ray equipment, Infra-red, etc. yet requiring specialized equipment, training and certification.

### MODES FOR INVENTION

The preferred embodiment of the invention relates to the nozzle assembly 10 wherein the rear concave surface shape 13 is configured to fit different wind blade aerodynamic shapes or profile and locations lengthwise of the wind blade leading edge in relation to its longitudinal axis, in the case the blade radius it is not a standard one.

Another embodiment of the invention relates to a nozzle assembly 10 wherein the rear concave surface shape 13 is profiled fit to a wind blade leading edge in order to avoid material waste and reduce resistance to flow during sticky material application.

Yet, alternative embodiment relates to a nozzle assembly 10 wherein the intake adapter 12 is located over the frontal convex surface 14, before the entrance of the at least an entry reservoir 15 and its central axis is perpendicular to the frontal convex surface 14.

As above described in detail, the method can be performed by operator or a robot.

### INDUSTRIAL APPLICABILITY

Composites are being used more and more extensively in Wind Energy Industry because they provide an excellent combination of features like strength versus weight, durability, corrosion resistance, among others.

One of the challenges of such industry is to pace the demand by mass production. This scenario influences the repairing services as well, so consequently, improving the efficiency also in repairing is desired and needed.

While the invention has been disclosed by this specification, including its accompanying drawings and examples, various equivalents, modifications and improvements will be apparent to the person skilled in the art. Such equivalents, modifications and improvements are also intended to be encompassed by the following claims.

## Claims

1. A nozzle assembly (10) for repairing wind blades comprising a main rigid body (11) having at least a rear concave surface (13) and a frontal convex surface (14), wherein the concave shape is curved inwards in relation to a position in front and along a wind blade (22) leading edge surface to be repaired; at least an intake adapter (12) in the bottom portion of the main rigid body (11) for receiving a sticky repair or upgrade material, injected by a pistol-like caulking gun; at least an entry reservoir (15) inside the main rigid body (11) positioned in its bottom portion for accumulating injected material; at least a discharge reservoir (16) inside the main rigid body positioned in the top portion of the main rigid body for accumulating injected material; at least one discharge opening (18) in a range at least from 100µm thickness along at least a portion of the top of the main rigid body (11) located at distance of up to one quarter lateral length from the border of the rear concave surface (13) and after of discharge reservoir (16), for spreading the sticky repair or upgrade material (24) uniformly and directly on the wind blade leading edge to be repaired, a plurality of channels (17) passing through the main rigid body (11) for connecting the entry reservoir (15) and the discharge reservoir (16), assisting in the uniform distribution of the injected material between the entry reservoir (15) and the discharge reservoir (16).

2. A nozzle assembly (10) according to the claim 01 wherein the at least one discharge opening (18) is preferably in a range from 300µm to 950µm.

3. A nozzle assembly (10) according to the claim 01, wherein the rear concave surface shape (13) is configured to fit different wind blade aerodynamic shapes or profiles.

4. A nozzle assembly (10) according to the claim 01, wherein the intake adapter (12) is located over the frontal convex surface (14), before the entrance of the at least an entry reservoir (15) and its central axis is perpendicular to the frontal convex surface (14).

5. A nozzle assembly (10) according to the claim 01 wherein the nozzle assembly (10) is made either of metal, plastic or a flexible material.

6. A method of repairing wind blades comprising the steps of surface preparation by:
cleaning the area where the repair or upgrade material (24) will be applied with a solvent covering at least twice the distance of the work area surface, in this case the leading edge bonding line, on each side using a tac rag to avoid any contamination, and
rinsing with distilled water to check if surface is fully cleaned, and
checking if the water does not stay evenly on the cleaned surface and/or if breaks/beads appear, if so, the cleaning process needs to be repeated as necessary until area is fully cleaned, and
sanding down the surface carefully removing all damaged material in case of a repair or roughen top coat in case of an upgrade, and
removing dust carefully with clean rag then do a second pass with a tack rag, and
further comprising product application steps by
locating the nozzle centered over the Leading Edge of the blade wherein the center of the intake hole should be aligned, by hand, with the bonding line of the blade or exact midpoint between the suction side shell and the pressure side shell, and
commencing the pumping of the material to be applied into the intake hole and continue until both reservoirs and channels have been filled, at which point the material will begin to be displaced from the discharge opening wherein the pumping of the material may be done either with a manual, electrical or pneumatic system, the latter being preferable to ensure a constant material flow, and
once the material is showing from the discharge opening, beginning to displace the nozzle away from the first material applied wherein the nozzle should at no point in time come in contact with the discharged material, and
ensuring the correct constant speed of displacement and material flow requirements are met so the displaced material has the thickness as specified by the supplier of the repair or upgrade material, and
sliding the nozzle and pumping equipment over the entire application area effectively coating the LE with the upgrade or repair material, and
when finished, creating a negative pressure on the pumping equipment to reverse the flow of material and effectively stop the application visually ensuring that no residue material contaminates the adjacent areas, and
checking the material thickness by using a wet thickness gauge in an area where this verification will not compromise the application.

7. A method of repairing wind blades according to the claim 06 wherein the steps of surface preparation and product application are performed by a robot arm.

8. A repairing wind blade kit set comprising an elastomeric sticky repair or upgrade material (24) including at least a nozzle assembly 10 according to the claim 01, and at least one of
an orbital sander, and
a 120 grit sanding paper, and
a solvent cleaner, and
clean rags, and
distilled water, and
alcohol based clean, and
a manual, pneumatic or electric cartridge gun, and
adhesion promoter, and
drying rags, and
wet film thickness gauge, and
air compressor with hoses, and
Leading Edge Protection or repair material, and
a manual or robotic displacement system.
